## Europäisches Patentamt
## European Patent Office
## Office européen des brevets

(19)

(11) Numéro de publication: **0 033 324**
**B1**

(12)
# FASCICULE DE BREVET EUROPEEN

(45) Date de publication du fascicule du brevet:
04.04.84

(51) Int. Cl.³: **A 23 C 9/20**, A 23 K 1/08

(21) Numéro de dépôt: **80901463.2**

(22) Date de dépôt: **31.07.80**

(86) Numéro de dépôt international:
**PCT/FR 80/00129**

(87) Numéro de publication internationale:
**WO 81/00342 (19.02.81 Gazette 81/5)**

(54) **PROCEDE D'OBTENTION D'EXTRAIT SEC DE COLOSTRUM, EXTRAIT SEC OBTENU ET SON UTILISATION.**

(30) Priorité: 03.08.79 FR 7920015
29.07.80 FR 8016687

(43) Date de publication de la demande:
12.08.81 Bulletin 81/32

(45) Mention de la délivrance du brevet:
04.04.84 Bulletin 84/14

(84) Etats contractants désignés:
AT CH DE GB LI LU NL SE

(56) Documents cités:
DE - B - 1 069 828
FR - A - 398 941
FR - A - 1 569 698
·FR - A - 2 399 843

Chemical Abstracts, volume 82, no. 7, 17 février 1975, (Columbus, Ohio, USA), R. Larson, "Capability of lambs to absorb-immunoproteins from freeze-dried bovine colestrum", voir page 308, l'abrégé 41731a
Journal of Dairy Science, volume 62, no. 3, mars 1979, J. Foley, "Performance of calves fed colostrum stored by freezing, fermentation or treatment with lactic or adipic acid", pages 459-467
Chemical Abstracts, volume 92, no. 21, 26 mai 1980 (Columbus, Ohio, USA), page 502, l'abrégé 17937a

(73) Titulaire: O.R.A.A. (S.A.R.L.), 8, rue Borie,
F-33000 Bordeaux (FR)
Titulaire: ANGLADE, Louis, 2, place Albert 1er,
F-64000 Pau (FR)
Titulaire: Blanié, Paul, 282 rue Saint-Jacques,
F-75005 Paris (FR)

(72) Inventeur: ANGLADE, Louis, 2, place Albert 1er,
F-64000 Pau (FR)
Inventeur: BLANIE, Paul, 282, rue Saint-Jacques,
F-75005 Paris (FR)
Inventeur: PRAT, Marcel, 8, rue Borie, F-33000 Bordeaux (FR)

(74) Mandataire: Armengaud, Alain et al, Cabinet
ARMENGAUD AINE 3 Avenue Bugeaud, F-75116 Paris (FR)

(56) Documents cités: (suite)
Chemical Abstracts, volume 21, 10 novembre 1927, (Columbus, Ohio, USA), A. Ragsdale, "A study of colostrum with special reference to the effect of heat (pasteurisation) on its physico-chemical, bacteriological, innunological and nutritional changes", page 3658
Webb et al.: "Fundamentals of dairy chemistry", AVI PUBLICO, 1965, p. 535, paragraph 3

BUNDESDRUCKEREI BERLIN

Procédé d'obtention d'extrait sec de colostrum extrait sec obtenu et son utilisation

La présente invention a pour objet un procédé de fabrication d'extrait sec de colostrum comprenant une concentration du colostrum par chauffage. Elle se rapporte également à l'extrait sec résultant de ce procédé ainsi qu'à l'utilisation de cet extrait comme facteur de croissance ou comme facteur d'appétence.

En fait, les extraits secs obtenus selon la présente invention, impliquant un traitement spécial, trouvent une application remarquable comme facteur de croissance chez de nombreux êtres vivants et, en particulier, mais de façon non limitative chez les mammifères. De plus, et toujours selon la présente invention, si le procédé de fabrication précité implique au moins en partie un traitement incluant une modification de certaines caractéristiques organo-leptiques, l'extrait sec obtenu présente des propriétés d'inducteur d'appétence, d'orexigène ou de condiment chez les mêmes êtres vivants, non seulement chez les mammifères mais également chez des oiseaux ou des poissons.

On sait que le colostrum est secrété par les glandes mammaires au cours des dernier jours qui précédent le part, c'est-à-dire le vêlage dans le cas des vaches; il devient particulièrement abondant dans les premiers jours qui le suivent. Immédiatement après le part, sa composition est très différente de celle du lait habituel de la femelle considérée, puis elle s'en rapproche progressivement avec le temps.

Chez la vache par exemple, le lait de la première traite post-partum est quatre fois plus riche en matières azotées et trois fois plus riche en sels minéraux que le lait normal de l'animal. Il présente des proportions non négligeables de lactalbumine, de lactoglobuline et d'immunoglobulines. Les vaches laitières ayant une production journalière très supérieure à celle nécessaire à l'alimentation des jeunes veaux, les quantités de colostrum produites sont également très supérieures.

C'est essentiellement pour éviter des mélanges avec des laits normaux que certaines réglementations et, en particulier, la réglèmentation française, considèrent le pait provenant de traites opérées dans les sept jours suivant le part comme impropre à la consommation humaine.

Selon l'art antérieur, on est donc en présence de déchets n'ayant guère trouvé jusqu'à ce jour d'application commerciale suffisamment large et présentant une valeur ajoutée importante.

On connait cependant du FR-A-1 569 698 un procédé d'extraction de la fraction insaponifiable de la partie lipidique du colostrum. Ce procédé comprend une coagulation du colostrum, à une température inférieure à 100°C, une séparation de la partie coagulée, par exemple par essorage. Au lieu de coaguler le colostrum ou peut concentrer celui-ci sous vide jusqu'à obtention d'un liquide sirupeux et effectuer ensuite un séchage par pulvérisation, le produit presque complétement déshydraté étant soumis à un traitement de saponification, à l'aide d'un hydroxyde de métal alcalin, suivi d'une élimination des insolubles (par filtration) et d'une extraction du liquide avec un solvant de l'insaponifiable puis élimination du solvant. La fraction insaponifiable obtenue est sous forme d'une substance à consistance huileuse, ambre foncé, insoluble dans l'eau et utilisable en thérapeutique humaine, notamment en hormonothérapie.

La présente invention trouve en fait de nouveaux domaines d'aplications susceptibles de nombreux développements du lait colostral et surtout permet la récupération d'un extrait sec de colostrum plus facilement récupérable que par les méthodes connues, susceptible d'être employé tel quel dans des applications nouvelles, et également susceptible d'être soumis à une réaction de Maillard.

Le procédé selon la présente invention est caractérisé en ce qu'on emploie du colostrum prélevé sur des laits de vaches pendant les six premiers jours post-partum, le concentre jusqu'à 250 à 400 g/l d'extrait sec puis soumet le concentré obtenu à un séchage ultériseur à une température de l'ordre de 220 à 230°C. La concentration précitée peut être effectuée sous vide, par osmose inverse, ou à l'aide d'un évaporateur et le séchage ultérieur du concentré peut être effectué à l'aide d'une tour d'atomisation, ou à l'aide d'un séchoir à cylindres. Le procédé selon l'invention peut comporter intermédiairement ou en fin une réaction du type réaction de Maillard sur tout ou partie des produits traités. Selon un mode de réalisation de l'invention, le colostrum de départ est partiellement soumis à une réaction du type réaction de Maillard. Selon un autre mode de réalisation de l'invention, ledit procédé comprend au moins une phase de déshydratation ou concentration au moins partielle du colostrum.

La présente invention a également pour objet l'extrait sec obtenu à l'aide du procédé précité.

On a constaté expérimentalement que les extraits secs conformes à l'invention, présentent des effets remarquables en particulier sur le plan de la croissance et, comme il apparaît ci-dessous, dans de nombreux cas, sur le plan de l'induction d'appétence. Ceci a été observé notamment chez les mammifères habitués par définition à la consommation des produits lactés mais également à des animaux non mammifères tels que les poissons et les oiseaux.

Parmi les mammifères, on notera qu'à côté des animaux d'élevage pour lesquels la croissance joue un rôle important comme c'est le cas chez les bovins, les ovins ou chez les porcins et les équidés, on trouve d'excellents effets sur la volaille et sur les animaux domestiques, en particulier chiens et chats.

Les expériences ont montré que l'apport de colostrum en poudre obtenu selon le procédé de la présente invention dans les aliments des animaux en croissance et quelle que soit l'espèce provoque une stimulation importante de celle-ci, ce qui est particulièrement avantageux pour les éleveurs que ce soit pour la production de viande ou encore pour la production de reproducteurs.

L'expérience a également montré que l'appétence était stimulée lorsque le colostrum lors des traitements conformes à la présente invention subit des réactions de Maillard consécutives à un surchauffage à certains stades du traitement.

On rapellera que les réactions de Maillard sont dues à une réduction des sucres et, en particulier, du lactose par les amino-acides et en particulier par la lysine, ce qui entraîne notamment l'apparition d'une coloration brune bien connue dans toutes les caramélisations. Parmi les nombreux produits qui se forment au cours de ces réactions on notera des dérivés du furfural, des N-glycosides et des réductones. C'est pour la raison de ce changement de coloration plus ou moins prononcé selon que la réaction est complète ou non que la réaction de Maillard est généralement appelée la réaction de brunissement.

Dans ce qui suit, on proposera donc deux séries de procédés se distinguant l'un de l'autre par le recours ou non à la réaction de Maillard étant entendu que si pour fixer les idées 0 à 5% des produits ont subi ce type de réaction l'effet d'inducteur d'appétence se trouve combiné à l'effet sur la croissance.

Le procédé de fabrication consiste essentiellement à prélever les traites des premiers jours qui suivent le part, par exemple, dans le cas de la vache, les traites des quatre à six premiers jours. Ces traites peuvent être mélangées entre elles et mélangées avec celles d'autres traites prélevées de préférence dans les mêmes conditions ce qui assure une meilleure homogénéité du produit final. On rappellera que de nombreux animaux femelles peuvent être utilisés, c'est-à-dire essentiellement la vache, la brebis, la chèvre et, selon les pays, l'ânesse et la femelle du buffle par exemple.

Selon la présente invention, le lait colostral prélevé est éventuellement conservé au froid à des températures de l'ordre de 0 à 10°C, et pasteurisé généralement à 80°C si la législation locale l'exige puis concentré en tout ou partie. La concentration est ensuite suivie d'une déshydratation pour obtenir une poudre.

Selon les variantes qui vont être décrites, on peut provoquer ou non les réactions de Maillard.

On remarquera que l'on peut soit provoquer une réaction de Maillard n'atteignant qu'une partie de l'ensemble du colostrum traité, soit à partir de colostrum ou même de lait classique soumis à une réaction de Maillard et le mélanger ensuite avec le restant du colostrum traité confomément à la présente invention.

Dans ce qui suit, et pour simplifier on se référera à des exemples de traitements de colostrum seul soumis, dans certains exemples et de façon partielle, aux réactions de Maillard.

Pour mieux faire comprendre les caractéristiques techniques et les avantages de la présente invention, on va en décrire des exemples de réalisation, étant bien entendu que ceux-ci ne sont pas limitatifs quant à leur mode de mise en œuvre et aux applications qu'on peut en faire.

Les deux premiers exemples qui cont être présentés comportent des réactions du type réaction de Maillard. On notera qu'au cours de ces réactions le chauffage produit de plus des coagulations d'albumine, plus abondantes dans le colostrum que dans le lait normal.

## Exemple 1

Le colostrum n'ayant subi aucune séparation de ces constituants est pasteurisé puis concentré dans un évaporateur simple ou à multiples effets jusqu'à une teneur en extrait sec de 250 à 350 g par litre selon le type de séchoir utilisé, le colostrum concentré est envoyé sur un séchoir à cylindres tel ceux connus sous le nom de Hatmaker à bourbier dont les cylindres sont chauffés à 220/230°C, d'où le produit sec est détaché sous forme de paillettes plus ou moins épaisses ou de masses cylindriques qui seront broyées après refroidissement en poudre fine.

La réaction de Maillard se produit au cours de séchage sur les cylindres ce qui apparaît par la couleur blonde plus ou moins foncée des produits.

## Exemple 2

Une possibilité consiste à surchauffer à 90°C le concentré pendant un temps suffisant pour obtenir la réaction de Maillard jusqu'àu stade désiré et à sécher ensuite le concentré par atomisation dans une tour dite spray, ce qui a l'avantage d'obtenir directement une poudre très fine.

Les quatre exemples suivants ne font pas appel aux réactions de Maillard ou équivalentes.

## Exemple 3

Comme dans les cas précédents, le colostrum est pasteurisé à 80°C et concentré sous vide dans un concentrateur à un ou plusieurs effets et quelles qu'en soit les caractéristiques (à flots tombants, horizontaux à tubes ou à plaques, etc.), le type d'appareil ne devant que correspondre au but à atteindre: concentration sous vide à basse température 40/50°C, en finition jusqu'à concentration à 350/400 g d'extrait sec. La concentration peut également être obtenue par osmose inverse (voir Exemple 4).

Le concentré est ensuite envoyé à sécher dans une tour d'atomisation munie de cyclones de refroidissement d'où l'on obtient une poudre fine à température de 20/30°C à la sortie. Poudre ayant une bonne solubilité et dont les constituants fragiles acides aminés, vitamines et facteurs de croissance sont conservés.

## Exemple 4

Le concentré est envoyé pour le séchage sur des sécoirs à cylindre de type Hatmaker dit à gicleurs ou sous vide.

Avec ces appareils, il n'y a pas de réactions de Maillard si on ne surchauffe pas les cylindres.

Le colostrum séché se présente en paillettes ou pellets que l'on devra broyer pour obtenir la finesse de poudre recherchée.

## Exemple 5

Quelque soit le mode de séchage final, la concentration jusqu'à 200/250 g d'extrait sec par litre peut être obtenue par osmose inverse. Au-delà, il faut terminer la concentration dans un concentrateur sous vide.

Les extraits secs fabriqués selon l'un des Exemples 1 à 5 ont été administrés à un certain nombre d'animaux, bovins, ovins, porcins, équidés, volailles, chiens, chats.

Comme cela a déjà été signalé plus haut, les animaux ont tous manifesté une appétence accrue avec les produits résultants des Exemples 1 à 2, c'est-à-dire ayant subi une réaction de Maillard, mais dans l'ensemble de produits des différents exemples, ils ont manifesté des augmentations de croissance caractéristiques.

Pour fixer les idées, on va donner les résultats sur des veaux de race frisonne auxquels on a administré les produits selon l'Exemple 1. Les veaux de cette race pèsent à la naissance entre 30 et 35 kg. Au bout de dix jours, âge auquel ils sont généralement livrés aux entreprises d'élevage, ils pèsent entre 45 et 50 kg. Au bout de 60 jours d'élevage, c'est-à-dire à l'âge de 70 jours, ils pèsent de 75 à 85 kg, et au bout de 120 jours d'élevage, c'est-à-dire à l'âge de 130 jours, ils pèsent entre 190 et 200 kg.

En leur administrant, inclus dans la nourriture, de 50 à 30 g par jour et plus particulièrement de 15 à 20 g de l'extrait sec obtenu selon l'Exemple 1, on obtient selon les animaux une augmentation de poids de 5 à 20% par rapport à la normale et avec les doses de 15 à 20 g par jour, de 10 à 15%.

Ceci permet, soit de réduire la durée d'élevage jusqu'à abattage, soit d'augmenter le poids pour l'abattage.

Les expériences menées avec d'autres races donnent proportionnellement des résultats très équivalents.

Avec des veaux de race normande, pesant de 34 à 39 kg à la naissance, c'est-à-dire en moyenne 12,5% de plus que les frisons, on peut augmenter tous les chiffres ci-dessus indiqués en poids de 12,5%.

On notera de plus, que l'on peut ajouter aux produits obtenus après l'une ou l'autre des phases des procédés, des conservateurs, des vitamines, des parfums, des colorants et tous autres additifs adéquats autorisés par les règlementations locales en vigueur.

## Revendications

1. Procédé de fabrication d'extrait sec de colostrum comprenant une concentration du colostrum par chauffage, caractérisé par le fait qu'on emploie du colostrum prélevé sur des laits de vaches pendant les six premiers jours post-partum, le concentre jusqu'à 250 à 400 g/l d'extrait sec puis soumet le concentré obtenu à un séchage ultérieur à une température de 220 à 230° C.

2. Procédé selon la revendication 1, caractérisé pa le fait que la concentration est effectuée sous vide.

3. Procédé selon la revendication 1, caractérisé par le fait que la concentration est effectuée à l'aide d'un évaporateur.

4. Procédé selon la revendication 1, caractérisé par le fait que la concentration est effectuée par osmose inverse.

5. Procédé selon une quelconque des revendications 1 à 4, caractérisé par le fait que le séchage ultérieur est effectué en tour d'atomisation.

6. Procédé selon la revendication 5, caractérisé par le fait que la tour d'atomisation est munie de cyclones de refroidissement.

7. Procédé selon l'une des revendications 1 à 4, caractérisé par le fait que le séchage ultérieur est effectué sur séchoir à cylindres.

8. Procédé selon l'une des revendications 1 à 7, caractérisé en ce qu'il comporte intermédiairement ou en fin une réaction du type réaction de Maillard sur tout ou partie des produits traités.

9. Procédé selon l'une revendications 1 à 8, caractérisé en ce que le colostrum de départ est partiellement soumis à une réaction du type réaction de Maillard.

10. Procédé selon une quelconque des revendications 1 à 9, caractérisé en ce qu'il comprend au moins une phase de déshydratation ou concentration au moins partielle du colostrum.

11. Procédé selon l'une des revendications 1 à 10, caractérisé en ce que des additifs sont ajoutés en fin de l'une ou l'autre des diverses phases du procédé.

12. Procédé selon l'une des revendications 1 à 11, caractérisé par le fait que le produit contient en outre du colostrum n'ayant pas subi une réaction de Maillard.

13. Procédé selon la revendication 12, caractérisé par le fait que le produit lacté est du colostrum prélevé après le quatrième jour suivant le vêlage.

14. Extrait sec, caractérisé pa le fait qu'il est obtenu par l'un des procédés selon l'une des revendications 1 à 13.

15. Extrait sec selon la revendication 14, caractérisé par le fait qu'il contient un agen de conservation.

16. Extrait sec selon l'une des revendications 14 ou 15, caractérisé en ce qu'il contient des vitamines.

17. Extrait sec obtenu à l'aide du procédé selon l'une des revendications 1 ou 8 à 16, caractérisé par le fait qu'il est utilisé comme facteur de croissance.

18. Extrait sec selon l'une des revendications 15 à 17, caractérisé par le fait qu'il est utilisé comme facteur d'appétence.

19. Utilisation comme facteur de croissance de l'extrait sec de colostrum selon une quelconque des revendications 1 à 12.

20. Utilisation comme facteur d'appétence de l'extrait sec de colostrum selon une quelconque des revendications 1 à 12.

## Patentansprüche

1. Herstellungsverfahren von Trockenextrakt von Kolostrum, das eine Konzentration von Kolostrum durch Heizung umfaßt, dadurch gekennzeichnet, daß man aus Milch von während der sechs vorangehenden Tage niedergekommenen Kühen entnommenes Kolostrum benützt, es bis auf 250 bis 400 g/l Trockenextrakt konzentriert, dann das erhaltene Konzentrat einer späteren Trocknung bei einer Température von 220 bis 230°C unterzieht.

2. Verfahren nach Anspruch 1, dadurch gekennzeichnet, daß die Konzentration im Vakuum erfolgt.

3. Verfahren nach Anspruch 1, dadurch gekennzeichnet, daß die Konzentration mit Hilfe eines Verdampfers erfolgt.

4. Verfahren nach Anspruch 1, dadurch gekennzeichnet, daß die Konzentration durch umgekehrte Osmose erfolgt.

5. Verfahren nach einem der Ansprüche 1 bis 4, dadurch gekennzeichnet, daß die spätere Trocknung in einem Zerstäuberturm erfolgt.

6. Verfahren nach Anspruch 5, dadurch gekennzeichnet, daß der Zerstäuberturm mit Kühlzyklonen ausgestattet ist.

7. Verfahren nach einem der Ansprüche 1 bis 4, dadurch gekennzeichnet, daß die spätere Trocknung auf einem Zylindertrockner erfolgt.

8. Verfahren nach einem der Ansprüche 1 bis 7, dadurch gekennzeichnet, daß es zwischendurch oder am Ende für die Gesamtheit oder Teile der behandelten Produkte eine Reaktion des Maillardreaktionstyps enthält.

9. Verfahren nach einem der Ansprüche 1 bis 8, dadurch gekennzeichnet, daß das Kolostrum teilweise einer Reaktion des Maillardreaktionstyps unterzogen ist.

10. Verfahren nach einem der Ansprüche 1 bis 9, dadurch gekennzeichnet, daß es mindestens eine Phase der Dehydration oder Konzentration zumindest eines Teils des Kolostrums umfaßt.

11. Verfahren nach einem der Ansprüche 1 bis 10, dadurch gekennzeichnet, daß Zusätze am Ende der einen oder anderen der verschiedenen Verfahrensphasen zugesetzt werden.

12. Verfahren nach einem der Ansprüche 1 bis 11, dadurch gekennzeichnet, daß das Produkt außerdem Kolostrum, das einer Maillardreaktion nicht unterzogen wurde, enthält.

13. Verfahren nach Anspruch 12, dadurch gekennzeichnet, daß das Milchprodukt nach dem vierten auf das Kalben folgenden Tag entnommenes Kolostrum ist.

14. Trockenextrakt, dadurch gekennzeichnet, daß es nach einem Verfahren nach einem der Ansprüche 1 bis 13 erhalten ist.

15. Trockenextrakt nach dem Anspruch 14, dadurch gekennzeichnet, daß es ein Konservierungsagens enthält.

16. Trockenextrakt nach einem der Ansprüche 14 oder 15, dadurch gekennzeichnet, daß es Vitamine enthält.

17. Trockenextrakt, das mit Hilfe des Verfahrens nach einem der Ansprüche 1 oder 8 bis 16 erhalten wurde, dadurch gekennzeichnet, daß es als Wachstumsfaktor verwendet wird.

18. Trockenextrakt nach einem der Ansprüche 15 bis 17, dadurch gekennzeichnet, daß es als Appetitanregungsfaktor verwendet wird.

19. Benützung als Wachstumsfaktor von Trockenextrakt nach einem der Ansprüche 1 bis 12.

20. Benützung als Appetitanregungsfaktor von Trockenextrakt nach einem der Ansprüche 1 bis 12.

## Claims

1. Process for manufacturing dry extract of colostrum comprising a colostrum concentration by heating, characterized by the fact that the colostrum is drawn from cows' milk of the first six post-partum days, is concentrated up to 250 to 400 g/l dry extract and then the obtained concentrate is submitted to subsequent drying at a temperature from 220 to 230°C.

2. Process according to claim 1, characterized by the fact that the concentration is carried out under vacuum.

3. Process according to claim 1, characterized by the fact that the concentration is carried out by using an evaporator.

4. Process according to claim 1, characterized by the fact that the concentration is carried out by reverse osmosis.

5. Process according to any one of claims 1 to 4, characterized by the fact that the subsequent drying is carried out in an atomizing tower.

6. Process according to claim 5, characterized by the fact that the atomizing tower is provided with cooling cyclones.

7. Process according to one of claims 1 to 4 characterized by the fact that the subsequent drying is carried out on a cylinder dryer.

8. Process according to one of claims 1 to 7, characterized in that it comprises intermediarily or at the end a Maillard-type reaction on all or part of the treated products.

9. Process according to one of claims 1 to 8, characterized in that the initial colostrum is partially subjected to a Maillard-type reaction.

10. Process according to one of claims 1 to 9, characterized in that it comprises at least one deshydratation or concentration phase at least partial of the colostrum.

11. Process according to one of claims 1 to 10, characterized in that the adjuvants are added at the end of one or the other of the various phases of the process.

12. Process according to one of claims 1 to 11, characterized by the fact that the product contains, furthermore, colostrum not having been subjected to a Maillard reaction.

13. Process according to claim 12, characterized by the fact that the lactate product is of colostrum drawn off after the fourth day following the calving.

14, Dry extract, characterized by the fact that it is obtained by one of the processes according to one of the claims 1 to 13.

15. Dry extract according to claim 14, characterized by the fact that it contains a conservation agent.

16. Dry extract according to one of claims 14 or 15, characterized in that it contains vitamins.

17. Dry extract obtained by the use of the process according to one of claims 1 or 8 to 16, characterized by the fact that it is used as a growth factor.

18. Dry extract according to one of claims 15 to 17, characterized by the fact that it is used as an appetizing factor.

19. Utilization as growth factor of the dry extract of colostrum according to any one of claims 1 to 12.

20. Utilization as appetizing factor of the dry extract of colostrum according to any one of claims 1 to 12.